Europäisches Patentamt

(19) European Patent Office

Office européen des brevets

(11) Publication number : **0 381 880 B1**

(12) **EUROPEAN PATENT SPECIFICATION**

(45) Date of publication of patent specification :
**29.04.92 Bulletin 92/18**

(21) Application number : **89301275.7**

(22) Date of filing : **10.02.89**

(51) Int. Cl.⁵ : **B23K 20/08,** B21D 39/04,
F16L 55/162, F28F 11/02

(54) **Explosively welding sleeves to inner surfaces of tubes.**

(43) Date of publication of application :
**16.08.90 Bulletin 90/33**

(45) Publication of the grant of the patent :
**29.04.92 Bulletin 92/18**

(84) Designated Contracting States :
**BE CH DE ES FR LI**

(56) References cited :
**EP-A- 0 043 672**
**EP-A- 0 265 284**
**WO-A-87/06169**
**FR-A- 2 195 769**
**GB-A- 1 280 451**
**GB-A- 1 584 451**
**US-A- 3 781 966**
**PATENT ABSTRACTS OF JAPAN, vol. 7, no.**
**141 (M-223)[1286], 21st June 1983; & JP-A-58**
**55 183 (ASAHI KASEI KOGYO K.K.) 01-04-1983**

(73) Proprietor : **THE BABCOCK & WILCOX**
**COMPANY**
**1010 Common Street, P.O. Box 60035**
**New Orleans, Louisiana 70160 (US)**

(72) Inventor : **Feldstein, Joel Gary**
**2722 Saxon Street, N.E.**
**North Canton Ohio 44721 (US)**
Inventor : **Merker, David Eugene**
**7216 12th Street**
**Minerva Ohio 44657 (US)**

(74) Representative : **Cotter, Ivan John et al**
**D. YOUNG & CO. 10 Staple Inn**
**London WC1V 7RD (GB)**

EP 0 381 880 B1

## Description

This invention relates to the explosive welding of sleeves to inner surfaces of tubes, for instance heat exchanger tubes, for example for the purpose of repairing the tubes.

Many heat exchangers, such as nuclear steam generators, employing tubes arranged in bundles by tube support plates and tubesheets, experience corrosive or mechanical damage in the vicinity of these structures which require repair. One method of making such a repair involves placing an internal sleeve inside the damaged tube at the location of the defect, the sleeve having a length sufficient to extend beyond the defect. As a result, the sleeve often must extend beyond the portions of the tube supported by a tubesheet or tube support plate. Further, to hold the sleeve in place and to prevent leakage around the sleeve, the sleeve must be sealed to the inner surface of the tube. Present methods of sealing the sleeve include expansion of the sleeve into the tube wall, brazing the sleeve to the tube wall, or explosive welding. The last-mentioned technique, however, generally requires some sort of external support to prevent excessive deformation of the tube.

Explosive expansion or welding of tubes in heat exchangers for either installation or repair is known. For example, US Patent No. US-A-3 411 198 discloses a plastic insert comprising an explosive charge placed within an annular tubular force transmitting member made of polyethylene, having an air gap at one end thereof, for expanding a tube into a tubesheet.

US-A-3 590 877 discloses an explosive activated metal cylindrical plug used to plug a defective heat exchanger tube in the vicinity of an externally supporting tubesheet. In this patent, shaped explosive charges are formed by wrapping sheets of the explosive around frustoconical and cylindrical styrofoam filler pieces, separated by a central cylindrical block of explosive.

US-A-3 724 062 also discloses an explosive plug for a heat exchanger tube in the vicinity of a tubesheet. The plug has a central cylindrical section and end frustoconical sections with an explosive charge which is cylindrically shaped and located in the central cylindrical section.

US-A-3 790 060 discloses the use of a pair of explosive members, one of which serves to weld a pipe to a perforated plate through which it passes, while the second expands the pipe into bearing contact with the plate at flared or counterbored portions at the faces of the perforated plate.

US-A-3 912 148 discloses a combination welding and brazing device for repairing heat exchanger leaks at junctions between the tubing and associated tubesheets. A number of grooves filled with brazing metal are located on one end of a metal sleeve. The other end has a reduced thickness and accommodates a relatively large charge of nitroguanidine. A smaller expansion charge of PETN (pentaerythritol tetranitrate) extends from the nitroguanidine through the centre of the sleeve and past the grooves. When detonated, the thin portion of the sleeve (which is inserted into the tubesheet portion of the tube) is welded to the inner surface of the tube, while the other end that lies within the free-standing end is merely pressed into closer brazing contact with the tube inner surface. The actual brazing itself is accomplished in a second step by means of a cartridge type electrical resistance heater that is inserted into the sleeve/tube to heat and liquefy the brazing metal.

US-A-3 912 148, which is assigned to the present applicants, is of particular interest in its description of the state of the art. The patent indicates that explosive welding is suitable for use within the tubesheet and brazing is suitable for use within the free-standing portion of the tube bank, due to concerns of excessive tube deformation. The explosion used in the free-standing portion is used only to expand the brazing portion of the sleeve into close contact with the tube inner wall, not to accomplish the joining itself.

US-A-4 028 789 also discloses a combination welding/brazing process, quite similar to that of US-A-3 912 148, where the welding is done within the tubesheet supported portion of the tube and expansion is done in the free-standing portion of the tube.

US-A-4 021 907 discloses an explosive plug for sealing a defective tube held in a heat exchanger tubesheet. Each end of the plug has a hollow cylindrical or frustoconical end filled with a similarly shaped explosive charge. The various embodiments of this patent show the use of a detonator on one end and a percussion pin on the other so that both charges are detonated almost simultaneously.

US-A-4 513 903 discloses yet another sleeving apparatus and method for sleeving a defective tube within a tubesheet, where the sleeve is welded directly over the defective portion of the tube. US-A-4 567 632, while disclosing an explosive method of repairing defective tubes outside of the tubesheet, employs an external support comprising a low melting point alloy cast around the free-standing portions of the tubes. US-A-4 587 904 discloses a debris free plug assembly for repairing a tube within a tubesheet.

US-A-3 781 966 relates to the explosive expansion of the steel sleeves in heavily eroded tubes such as those employed in heat exchangers. The sleeve is provided with an annular taper extending from an end located within the tube. This taper is reversed by the explosive expansion of the sleeve when an explosive charge is detonated within the sleeve and it serves to provide a smooth juncture between the tube and the sleeve to improve fluid flow.

In general, the above-mentioned patents teach the explosive welding of a sleeve into a tube in an area surrounded by the tubesheet or tube support plates. Where an explosive charge is used to expand a sleeve or plug inside a heat exchanger tube, at a location which is not immediately within the tubesheet or tube support plate, explosive welding is not utilised. None of the above-mentioned patents discloses or suggests the possibility of explosively welding a sleeve having tapered areas or portions, into the interior of a heat exchanger tube, at a location which need not be mechanically supported from the outside.

EP-A-0053672 discloses a method for expanding the pipe at a predetermined location therealong by rapidly discharging an electric charge through a wire which explodes the wire and initiates a shock wave that can cause cold welding of a spherically shaped sleeve to the inside of a tube. Such an explosive fire will generally produce a spherical shock wave and the energy of the explosion can only be controlled by shaping the surface of the sleeve.

According to a first aspect of the invention there is provided a method of explosively welding a sleeve to an inner surface of a tube remote from a mechanical support for the tube, the method comprising:

providing the sleeve with a portion having an outer surface of which the diameter tapers towards an end of the sleeve;

positioning the sleeve inside the tube so that the tapered portion is in the tube at the location remote of external mechanical support for the tube;

tapering an explosive charge;

positioning the explosive charge inside the tapered portion of the sleeve so that the tapered explosive charge provides a decreased amount of explosive charge along the tapered portion of the sleeve.;

centring the tapered portion of the sleeve in the tube to leave an annular stand-off distance between the sleeve and the tube; and

detonating the explosive charge to expand the tapered portion of the sleeve and weld the tapered portion of the sleeve to the tube.

According to a second aspect of the invention there is provided apparatus for repairing a damaged section of a tube remote from a mechanical support for the tube, the apparatus comprising:

a sleeve capable of being positioned in the tube for spanning the damaged section, the sleeve having a portion having an outer surface of which the diameter tapers towards an end of the sleeve;

an explosive charge holding assembly including a cup for containing an explosive charge and positioned in the tapered portion of the sleeve, and a frustoconical centre portion extending into the explosive charge and shaping the charge so that it tapers and reduces in amount along the tapered portion of the sleeve;

centring means for engaging an inside diameter of the tube for centring the tapered portion of the sleeve in the tube; and

an explosive charge held by said assembly in the tapered portion of the sleeve for expanding and explosively welding the tapered portion of the sleeve to the interior of a tube.

The two aspects of the invention provide respectively a method and an apparatus for explosively welding a sleeve within a tube, such as a heat exchanger tube, without the use of a removable external support such as a removable die or a fixed external support such as a tubesheet. The sleeve, which is inserted into a tube and which spans a damaged area of the tube, has tapered areas or portions that can be explosively expanded and welded to the heat exchanger tube without the need for an exterior mechanical support for the heat exchanger tube. The tapered portions have a reduced welding mass which permits the use of decreased explosive loading and improves welding performance. An explosive charge is contained in a plastic assembly. The plastic assembly includes a cup which holds the explosive and which is received within a tapered portion of the sleeve. The cup includes a tapered centre portion which shapes the explosive charge for optimum performance. A closure cap at the opposite end of the plastic assembly may carry a detonator. The cap may be shaped so that, upon detonation of the detonator, forces are not transmitted to the sleeve or tube. In this wry, neither the sleeve nor the tube is deformed by the action of the detonator. The cap also serves to form a watertight seal for the explosive charge. In one form of implementation, the tapered portion of the sleeve is located adjacent an end of the sleeve and the plastic assembly has a flange which engages against the interior of the tube for centring the assembly (and thereby the tapered portion of the sleeve) in the tube. In another form of implementation, the sleeve has a region of increased external size between an end and the tapered portion thereof and the tapered portion is centred in the tube by engagement of the region of increased external size with the interior of the tube. In the latter case, the plastic assembly may have a flange which engages against the interior of the sleeve to position the assembly in the sleeve.

The invention provides an apparatus and/or method for explosively welding a sleeve to the interior of a tube which can be used at a location spaced from any exterior mechanical support for the tube.

The invention will now be further described, by wry of illustrative and non-limiting example, with reference to the accompanying drawings, in which like references designate like or corresponding parts throughout, and in which:

Figure 1 is an elevation, partly in section, showing a plurality of tubes supported between a tubesheet and a tube plate, with one of the tubes containing sleeves for repairing damaged sections of that tube;

Figure 2 is an enlarged, partial sectional view illustrating the area of one end of a sleeve inside a tube to be repaired, the sleeve containing an explosive device for welding the sleeve to the tube;

Figure 2A is a view similar to Figure 2, showing a modified form of the sleeve shown in Figure 2;

Figure 3 is a sectional view showing the end area of the sleeve depicted in Figure 2 after it has been explosively welded to the interior of the tube; and

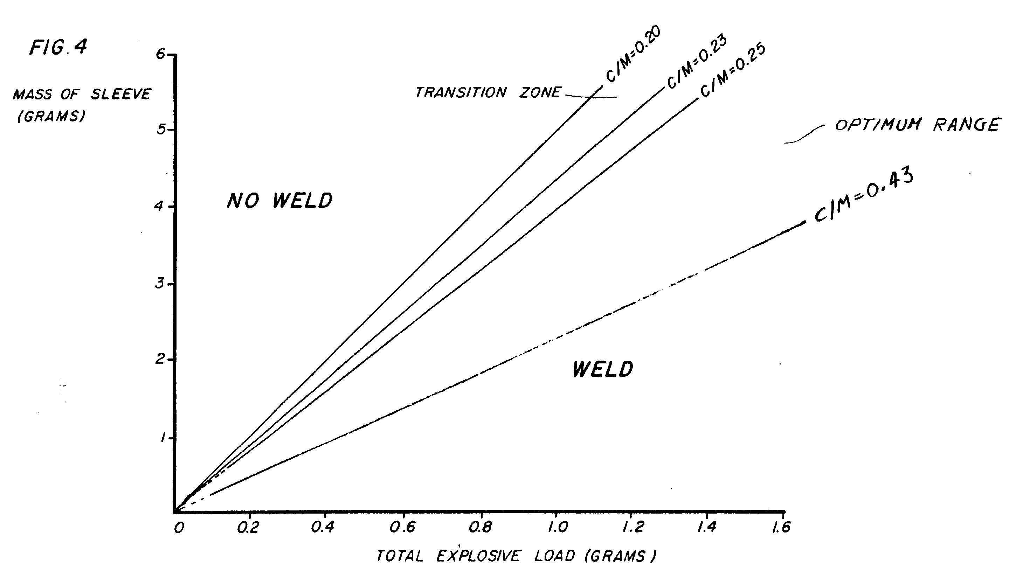

Figure 4 is is a graph relating the mass of a sleeve to the total weight of an explosive charge for expanding the sleeve and the conditions required for welding the sleeve to the interior of a tube.

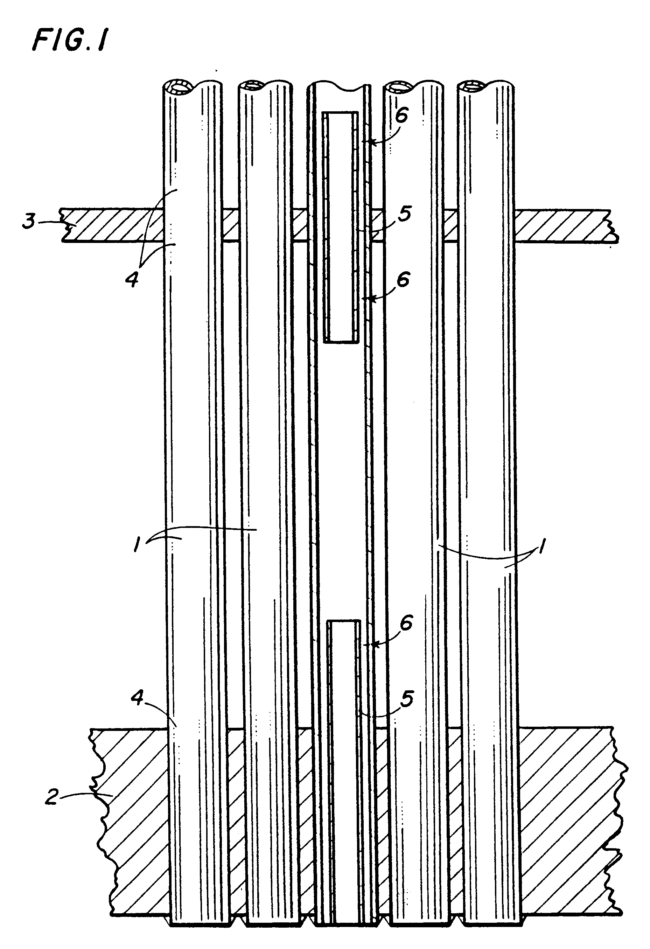

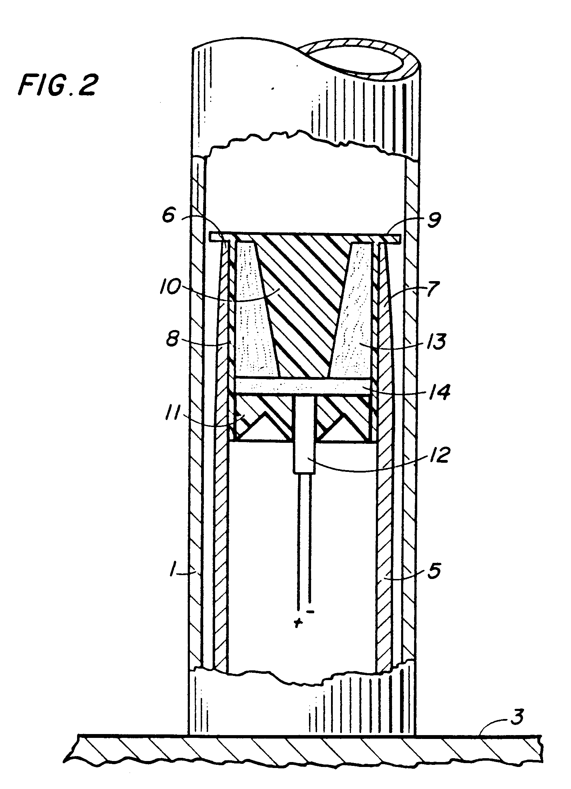

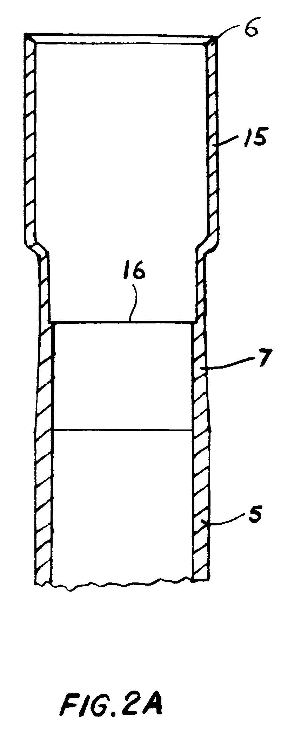

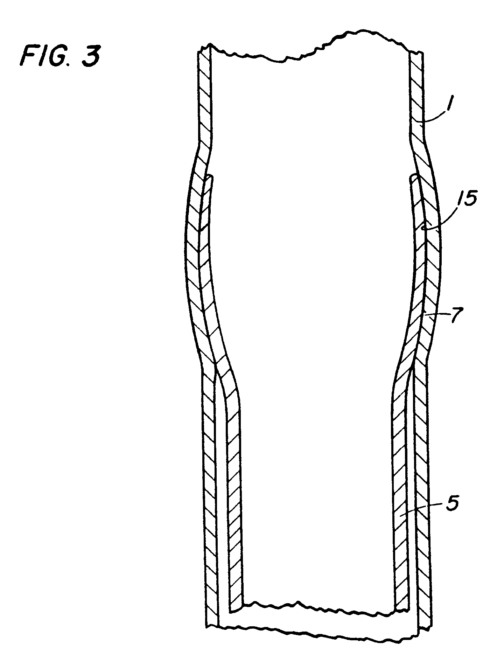

Figure 1 of the drawings shows sleeves 5 (having opposite ends 6) positioned within one of a plurality of tubes 1 that are supported between a tubesheet 2 and a tube plate 3. The sleeves 5 are used to bridge damaged areas 4 in a tube 1. Prior to the sleeves 5 being explosively welded to the tube 1, as described below, they are appropriately axially positioned within the tube by any suitable means (not shown). The tubes 1 may for example be heat exchanger tubes of a steam generator, for instance a nuclear steam generator. The sleeves 5 are shown only schematically in Figure 1 and are described in more detail below with reference to Figures 2, 2A and 3.

Referring now to Figure 2, the sleeve 5 has a constant internal diameter and has an area or portion 7 at least at one of its opposite ends 6, the outer surface of which has a diameter which tapers towards the end 6 of the sleeve whereby the sidewall thickness of the portion 7 decreases towards the end 6. The taper reduces the welding mass, as described hereafter, thereby allowing use of a reduced explosive charge 13, 14 while improving the welding performance.

An explosive device, that preferably comprises an explosive charge 13 of nitroguanidine, a booster charge 14 of PETN (pentaerythritol tetranitrate) and a bridge wire detonator 12, is introduced into the tube 1. The explosive components are contained in an acrylic plastic assembly that serves several functions. The main part of the assembly is a generally cylindrical cup 8 that has a flange 9 on one end to axially position the cup 8 (containing the charges) with respect to the sleeve 5 and to centre the sleeve within the tube 1 so as to provide a predetermined stand-off, as defined hereinbelow, between the outer surface of the sleeve 5 and the inner surface of the tube 1. A tapered frustoconical centre portion 10 of the cup 8, which tapers with increasing cross-sectional area towards the flange 9 of the cup 8 (i.e. towards the end 6 of the sleeve 5), reduces the amount of explosive charge 13 used and shapes it to achieve optimum welding performance. A closure cap 11 on the opposite end of the cup 8 contains the detonator 12 and seals the assembly from water. The cap 11 has a circular outward-facing, V-shaped groove to reduce deformation of the sleeve 5 when the detonator 12 is initiated so that the force is not transmitted to the sleeve 5 and tube 1, thereby reducing deformation. The assembly 8, 9, 10, 11 is advantageously composed of acrylic plastic.

Figure 2A shows a sleeve 5 which is similar to that shown in Figure 2 and which will be described only in so far as it differs from that of Figure 2. The sleeve 5 of Figure 2A differs from that of Figure 2 in that at least the illustrated end 6 is provided with an expanded or "belled-out" region or extension 15, that is a region of increased external diameter, whereby the tapering outside diameter portion 7 is disposed near to rather than at the end 6. The outer diameter of the expanded region 15 is such that the region is a loose sliding fit within the tube 1. As a consequence, the expanded region 15 (rather than the flange 9 of the cup 8) serves to centre the sleeve 5 within the tube 1 to provide the above-mentioned predetermined stand-off. The cup 8 (not shown in Figure 2A) for use with the sleeve 5 of Figure 2A is therefore modified in that its flange 9 (not shown) is of reduced diameter and serves in this case only to axially position the cup with respect to the sleeve. To this end, the reduced size flange 9 sits on a ledge 16 formed within the sleeve 5.

Apart from the above-described reduction in the diameter of the flange 9 of the cup 8, the explosive device and the plastic assembly holding same, in the case of Figure 2A, may be the same as those employed in the case of Figure 2. It should, however, be noted that, in the case of either Figure 2 or Figure 2A, the V-shaped groove in the cap 11 could be omitted since, while useful, this feature is not essential.

As shown in Figure 3 (for the arrangement of Figure 2), after the explosive charge assembly has been detonated the tapered portion 7 of the sleeve 5 is expanded and explosively welded at 15 to the inner surface of the tube 1. This is accomplished without the aid of an exterior mechanical support, that is at a location which is spaced away from any tubesheet or tube plate. The resulting deformation or bulge at the weld 15 is minimal, involving an approximately 17% increase in the outside diameter of the tube 1.

The bulge can even be reduced by about 30% by simply providing water on the outside of the tube 1. Other aqueous environments, such as ice or aqueous solution, could also be utilised. This is easily done, particularly under the environment of a heat exchanger where water can easily be added over the tubesheet or tube support plate during the explosive welding process, and then removed without any detrimental effects whatsoever.

By observing certain parameters it is possible to explosively weld the tapered portion 7 of the sleeve 1 to the interior of the tube without rupturing the tube, even where the weld is made at a location spaced away from any external mechanical support such as a tubesheet or tube plate.

As used herein, the term stand-off is defined as the distance the sleeve 5 needs to travel before it impacts with the tube 1. The stand-off is advantageously one sixth to two times the wall thickness of the sleeve 5. In the illustrated tubular configurations, the stand-off is the annular space between the sleeve 5 and the tube 1. The stand-off must be large enough to allow the sleeve 5 to achieve sufficient velocity so that the impact pressure will be large enough to produce a weld. It has also been found that the mass of the sleeve 5 must be less than that of the tube 1. In the case of a fixed tubular configuration, this relates to sleeve wall thickness. To produce acceptable welds, the sleeve wall thickness should taper to about 60% to 75% of the tube wall thickness.

As noted above, it is also important that the portion 7 of the sleeve to be welded is tapered. Taper angles of from 1° to 5.7° have been successfully tested. The best results occurred, however, with an angle of taper of from 3° to 4.5°. Tapering the sleeve has several advantages. The first is that the taper helps reduce the mass of the sleeve that is being welded. This helps reduce the amount of explosive required to weld the sleeve and, hence, results in less deformation. Second, the taper helps increase the collision angle between the flyer and the base material. The collision angle is important for the formation of an explosive jet which removes surface oxides, and for a resulting wavy explosive weld interface caused by plastic flow of material during the collision. Finally, tapering the sleeve will produce a continuously increasing stand-off which will promote better welding conditions.

It is also important to select the appropriate amount of explosive charge.

The amount of explosive required is directly proportional to the amount of flyer that is being propelled to make the weld. Therefore, the amount (total weight) of explosive (C) is proportional to the mass (M) of the sleeve for a given explosive length and is expressed as a ratio C/M. This ratio is obtained by dividing the total weight of the explosive by the weight of the sleeve for that length.

For nitroguanidine, the densities which produce the best results were 0.45 to 0.55 g/cm$^3$. The total explosive weight also included a PETN booster charge whose amount and position were quite important for weld initiation and resulting weld quality. The range of explosive weight per sleeve weight ratios C/M which produced the best results was 0.25 to 0.43. By shaping the charge, using the tapered conical centre portion of the plastic assembly, the appropriate C/M ratio was maintained, although this ratio was not constant throughout the explosive length. An overall range of C/M of 0.2 to 0.7 can be used to obtain acceptable welds.

It was also found that Inconel (a trade mark of International Nickel) Alloy 600 or 690 sleeves could be welded into Inconel 600 tubes where the sleeve thickness was from 0.76 mm (0.030 in) to 1.42 mm (0.056 in) and the tube had an inner diameter of 19.7 mm (0.775 in) and an outer diameter of 22.2 mm (0.875 in). The explosive resulted in a bulge having a outer diameter of 25.4 mm (1 in). Where water was used on the outside of the tube, the bulge was reduced by about 30% to a final outer diameter of approximately 24.4 mm (0.960 in). The weld length was typically 6.35 mm (0.25 in).

Parameters for sleeves to repair heat exchanger tubes made of Inconel (trade mark of International Nickel) Alloy 600 tubes of two different sizes have been explored and are set out in the following table. (Sleeves for other size tubes and other tube and sleeve materials can be deduced from the information given in the table.) In the table, the abbreviations "ID" and "OP" represent "inside diameter" and "outside diameter", respectively.

| Parameters | Sleeves for | |
| --- | --- | --- |
| | 19.05 mm (3/4 in) Tubes | 22.23 mm (7/8 in) Tubes |
| Tube Material | Alloy 600 | Alloy 600 |
| Nominal Tube ID/OD in mm (in) | 16.61-16.87/19.05 (0.654-0.664/0.750) | 19.69/22.23 (0.775/0.875) |
| Sleeve Material | Alloy 600 or 690 | Alloy 600 or 690 |
| Nominal Sleeve ID/OD in mm (in) | 13.87/16.15 (0.546/0.636) | 15.82/18.52 (0.623/0.729) |
| Sleeve Thickness in mm (in) | 0.508-1.143 (0.020-0.045) | 0.762-1.422 (0.030-0.056) |
| Minimum Weld length in mm (in) | 5.46 (0.215) | 6.35 (0.250) |
| Approximate final Tube OD in Air in mm (in) | 22.23 (7/8) | 25.40 (1) |

The techniques embodying the invention provide an advantageous alternative to or replacement for the formerly utilised time-consuming brazing operation. Brazing generally is slow and complicated and requires large amounts of equipment. The use of explosive allows the majority of work to be performed away from the location where the sleeves are to be installed. This is particularly advantageous in areas of high radiation in nuclear heat exchangers, as it reduces the amount of radiation to which personnel would otherwise be exposed.

## Claims

1. A method of explosively welding a sleeve (5) to an inner surface of a tube (1) remote from a mechanical support (2, 3) for the tube (1), the method comprising:
    providing the sleeve (5) with a portion (7) having an outer surface of which the diameter tapers towards an end (6) of the sleeve;
    positioning the sleeve (5) inside the tube (1) so that the tapered portion (7) is in the tube (1) at the location remote of external mechanical support (2, 3) for the tube (1);
    tapering an explosive charge (13, 14);
    positioning the explosive charge (13, 14) inside the tapered portion (7) of the sleeve (5) so that the tapered explosive charge (13) provides a decreased amount of explosive charge along the tapered portion (7) of the sleeve.;
    centring the tapered portion (7) of the sleeve (5) in the tube (1) to leave an annular stand-off distance between the sleeve (5) and the tube (1); and
    detonating the explosive charge (13) to expand the tapered portion (7) of the sleeve (5) and weld the tapered portion of the sleeve to the tube.

2. A method according to claim 1, including positioning the sleeve (5) in radially spaced relationship from the inner surface of the tube (1) to form a stand-off distance of one sixth to two times the wall thickness of the sleeve at a location adjacent to the tapered portion (7).

3. A method according to claim 1 or claim 2, wherein the outer surface of the tapered portion (7) of the sleeve (5) tapers at an angle of from 1° to 5.7°.

4. A method according to claim 3, wherein the angle is from 3° to 4.5°.

5. A method according to any one of claims 1 to 4, wherein the sleeve (5) has a well thickness which is about 60% to 100% of the wall thickness of the tube (1).

6. A method according to any one of claims 1 to 5, including surrounding the tube (1) with an aqueous environment for reducing an amount of bulging of the tube upon the explosive welding of the sleeve (5) to the tube.

7. A method according to claim 6, wherein the aqueous environment is water.

6

8. A method according to claim 6, wherein the aqueous environment is ice.

9. A method according to claim 9, wherein the aqueous environment is a solution.

10. A method according to any one of the preceding claims, wherein the sleeve (5) has a region (15) of increased external size between its end (6) and its tapered portion (7) and the tapered portion (7) is centred in the tube (1) by engagement of the region (15) of increased external size with the interior of the tube.

11. A method according to any one of the preceding claims, wherein the tapered portion (7) is located adjacent the end (6) of the sleeve (5) and the explosive charge (13) is held in an assembly (8, 11) which is provided with a flange (9) which engages the interior of the tube (1) to centre the sleeve within the tube.

12. Apparatus for repairing a damaged section (4) of a tube (1) remote from a mechanical support (2, 3) for the tube (1), the apparatus comprising:

a sleeve (5) capable of being positioned in the tube (1) for spanning the damaged section (4), the sleeve having a portion (7) having an outer surface of which the diameter tapers towards an end (6) of the sleeve;

an explosive charge holding assembly (8, 11) including a cup (8) for containing an explosive charge (13) and positioned in the tapered portion (7) of the sleeve (5), and a frustoconical centre portion (10) extending into the explosive charge (13) and shaping the charge so that it tapers and reduces in amount along the tapered portion (7) of the sleeve;

centring means for engaging an inside diameter of the tube (1) for centring the tapered portion (7) of the sleeve (5) in the tube (1); and

an explosive charge (13) held by said assembly (8, 11) in the tapered portion (7) of the sleeve (5) for expanding and explosively welding the tapered portion of the sleeve to the interior of a tube.

13. Apparatus according to claim 12, wherein said assembly (8, 11) includes a cap (11) covering the explosive charge (13), a detonator (12) for the explosive charge is held in the cap (11), and the cap (11) has a groove therein for avoiding transmission of forces from the detonator, when the detonator is detonated, to the sleeve (5).

14. Apparatus according to claim 13, including a booster charge (14) between the detonator (12) and the explosive charge (13).

15. Apparatus according to any one of claims 12 to 14, wherein the outer surface of the tapered portion (7) of the sleeve (5) tapers at an angle of from 1° to 5.7°.

16. Apparatus according to claim 15, wherein the angle is form 3° to 4.7°.

17. Apparatus according to any one of claims 12 to 16, wherein the centring means is sized to establish a stand-off distance between the sleeve (5) and the interior of a tube (1) containing the sleeve of from one sixth to two times the thickness of the sleeve (5).

18. Apparatus according to any one of claims 12 to 17, wherein said centring means comprises a region (15) of increased external size of the sleeve (5), which region is between the end (6) and the tapered portion (7) of the sleeve (5).

19. Apparatus according to any one claims 12 to 17, wherein said centring means comprises a flange (9) of the explosive charge holding assembly (8, 11).

20. Apparatus according to any one of claims 12 to 14, wherein the sleeve (5) has a wall thickness of from 0,76 mm (0,03 in) to 1,42 mm (0,056 in).

21. Apparatus according to any one of claims 12 to 20, wherein the sleeve (5) is of INCONEL Alloy 600 or Alloy 690 and is positioned within a tube (1) of INCONEL Alloy 600.

**Patentansprüche**

1. Verfahren zum Explosionsschweißen einer Buchse (5) an eine Innenfläche eines Rohres (1) entfernt von einem mechanischen Träger (2, 3) für das Rohr (1), bei dem man

die Buchse (5) mit einem Abschnitt (7) mit einer Außenoberfläche versieht, deren Durchmesser sich zu einem Ende (6) der Buchse hin verjüngt,

die Buchse (5) im Inneren des Rohres (1) derart anordnet, daß der verjüngte Abschnitt (7) in dem Rohr (1) sich in der Lage entfernt von einem äußeren mechanischen Träger (2, 3) für das Rohr (1) befindet,

eine Sprengladung (13, 14) mit einer Verjüngung versieht,

die Sprengladung (13, 14) im Inneren des verjüngten Abschnittes (7) der Buchse (5) derart anordnet, daß die veijüngte Sprengladung (13) eine verminderte Menge an Sprengladung entlang dem verjüngten Abschnitt (7) der Buchse liefert,

den verjüngten Abschnitt (7) der Buchse (5) in dem Rohr (1) zentriert, um einen ringförmigen Abstand zwischen der Buchse (5) und dem Rohr (1) zu lassen, und

die Sprengladung (13) explodieren läßt, um den verjüngten Abschnitt (7) der Buchse (5) auszudehnen und den verjüngten Abschnitt der Buchse mit dem Rohr zu verschweißen.

2. Verfahren nach Anspruch 1, bei dem man die Buchse (5) in radial beabstandeter Beziehung von der Innenoberfläche des Rohres (1) anordnet, um einen Abstand von einem Sechstel bis zum Zweifachen der Wanddicke der Buchse an einer Stelle benachbart zu dem verjüngten Abschnitt (7) zu bilden.

3. Verfahren nach Anspruch 1 oder Anspruch 2, bei dem sich die Außenoberfläche des verjüngten Abschnittes (7) der Buchse (5) in einem Winkel von 1° bis 5,7° verjüngt.

4. Verfahren nach Anspruch 3, bei dem der Winkel 3° bis 4,5° ist.

5. Verfahren nach einem der Ansprüche 1 bis 4, bei dem die Buchse (5) eine Wanddicke hat, die etwa 60 bis 100 % der Wanddicke des Rohres (1) ist.

6. Verfahren nach einem der Ansprüche 1 bis 5, bei dem man das Rohr (1) mit einer wäßrigen Umgebung zum Reduzieren einer Ausbeulmenge des Rohres beim Explosions-schweißen der Buchse (5) an das Rohr umgibt.

7. Verfahren nach Anspruch 6, bei dem die wäßrige Umgebung Wasser ist.

8. Verfahren nach Anspruch 6, bei dem die wäßrige Umgebung Eis ist.

9. Verfahren nach Anspruch 6, bei dem die wäßrige Umgebung eine lösung ist.

10. Verfahren nach einem der vorausgehenden Ansprüche, bei dem die Buchse (5) einen Bereich (15) von stärketer äußerer Größe zwischen seinem Ende (6) und seinem verjüngten Abschnitt (7) hat und der verjüngte Abschnitt (7) in dem Rohr (1) durch Eingreifen des Bereiches (15) von stärkerer äußerer Größe in das Innere des Rohres zentriert ist.

11. Verfahren nach einem der vorausgehenden Ansprüche, bei dem der verjüngte Abschnitt (7) in Nachbarschaft zum Ende (6) der Buchse (5) angeordnet wird und die Sprengladung (13) in einer Anordnung (8, 11) gehalten wird, die mit einem Flansch (9) versehen ist, welcher in das Innere des Rohres (1) eingreift, um die Buchse in dem Rohr zu zentrieren.

12. Vorrichtung zum Reparieren eines beschädigten Abschnittes (4) eines Rohres (1) entfernt von einem mechanischen Träger (2, 3) für das Rohr (1) mit

einer Buchse (5), die in dem Rohr (1) zum Überspannen des beschädigten Abschnittes (4) angeordnet werden kann, wobei die Buchse einen Abschnitt (7) mit einer Außenoberfläche hat, deren Durchmesser sich zu einem Ende (6) der Buchse hin verjüngt,

einer Halteanordnung (8, 11) für eine Sprengladung mit einem Becher (8), der eine Sprengladung (13) enthält und in dem verjüngten Abschnitt (7) der Buchse (5) angeordnet ist, und einem kegelstumpfförmigen Mittelabschnitt (10), der sich in die Sprengladung (13) erstreckt und die Ladung derart formt, daß sie sich verjüngt und daß ihre Menge entlang dem verjüngten Abschnitt (7) der Buchse vermindert ist,

Zentriereinrichtungen zum Eingreifen eines Innendurchmessers des Rohres (1) zum Zentrieren des verjüngten Abschnittes (7) der Buchse (5) in dem Rohr (1) und

einer Sprengladung (13), die von der Anordnung (8, 11) in dem verjüngten Abschnitt (7) der Buchse (5) für ein Auflehnen und Explosionsschweißen des verjüngten Abschnittes der Buchse an das Innere eines Rohres gehälten ist.

13. Vorrichtung nach Anspruch 12, bei der die Anordnung (8, 11) eine Kappe (11), die die Sprengladung (13) bedeckt, enthält, ein Sprengzünder (12) für die Sprengladung in der Kappe (11) gehalten wird und die Kappe (11) eine Nut darin aufweist, um Übertragung von Kräften von dem Sprengzünder, wenn dieser gezündet wird, zu der Buchse (5) zu verhindern.

14. Vorrichtung nach Anspruch 13 mit einer Übertragungsladung (14) zwischen dem Sprengzünder (12) und der Sprengladung (13).

15. Vorrichtung nach einem der Ansprüche 12 bis 14, bei der sich die Außenoberfläche des verjüngten Abschnittes (7) der Buchse (5) in einem Winkel von 1° bis 5,7° verjüngt.

16. Vorrichtung nach Anspruch 15, bei der der Winkel 3° bis 3,7° ist.

17. Vorrichtung nach einem der Ansprüche 12 bis 16, bei der die Zentriereinrichtungen so bemessen sind, daß sie einen Abstand zwischen der Buchse (5) und dem Inneren eines die Buchse enthaltenden Rohres (1) von einem Sechstel bis zum Zweifachen der Dicke der Buchse (5) ergeben.

18. Vorrichtung nach einem der Ansprüche 12 bis 17, bei der die Zentriereinrichtungen einen Bereich (15) stärkerer äußerer Größe der Buchse (5) umfassen, wobei dieser Bereich zwischen dem Ende (6) und dem verjüngten Abschnitt (7) der Buchse (5) ist.

19. Vorrichtung nach einem der Ansprüche 12 bis 17, bei der die Zentriereinrichtungen einen Flansch (9) der Halteanordnung (8, 11) für die Sprengladung umfassen.

20. Vorrichtung nach einem der Ansprüche 12 bis 14, bei der die Buchse (5) eine Wanddicke von 0,76 mm (0,03 Inch) bis 1,42 mm (0,056 Inch) hat.

21. Vorrichtung nach einem der Ansprüche 12 bis 20, bei der die Buchse (5) INCONEL-Alloy 600 oder -Alloy 690 ist und in einem Rohr (1) aus INCONEL-Alloy 600 angeordnet ist.

**Revendications**

1. Procédé de soudage par explosion d'un manchon (5) sur une surface interne d'un tube (1), loin d'un support mécanique (2, 3) de tube (1), le procédé comprenant les phases consistant à :

doter le manchon (5) d'une portion (7) présentant une surface externe dont le diamètre va en s'effilant vers une extrémité (6) du manchon;

positionner le manchon (5) dans le tube (1) de manière que la portion effilée (7) se trouve dans le tube (1) à l'emplacement éloigné du support mécanique externe (2, 3) de tube (1);

tailler une charge explosive (13, 14) en pointe;

positionner la charge explosive (13, 14) dans la portion effilée (7) du manchon (5) de manière que la charge explosive (13) taillée en pointe constitue une quantité réduite de charge explosive le long de la portion effilée (7) du manchon;

centrer la portion effilée (7) du manchon (5) dans le tube (1) de manière à laisser une distance d'écartement annulaire entre le manchon (5) et le tube (1); et

faire détoner la charge explosive (13) pour l'expansion de la portion effilée (7) du manchon (5) et le soudage de la portion effilée du manchon au tube.

2. Procédé selon la revendication 1, comprenant le positionnement du manchon (5) en relation d'espacement depuis la surface interne du tube (1) pour créer une distance d'écartement de 0,16 à 2 fois l'épaisseur de paroi du manchon à un emplacement adjacent à la portion effilée (7).

3. Procédé selon la revendication 1 ou 2, dans lequel la surface externe de la portion effilée (7) du manchon (5) va en diminuant à un angle de 1° à 5,7°.

4. Procédé selon la revendication 3, dans lequel l'angle est compris entre 3° et 4,5°.

5. Procédé selon l'une quelconque des revendications 1 à 4, dans lequel le manchon (5) présente une épaisseur de paroi qui est égale à 60% à 100% de l'épaisseur de paroi du tube (1).

6. Procédé selon l'une quelconque des revendications 1 à 5, comprenant l'opération consistant à entourer le tube (1) d'un environnement aqueux pour réduire la grosseur d'un renflement du tube lors du soudage par explosion du manchon (5) au tube.

7. Procédé selon la revendication 6, dans lequel l'environnement aqueux est de l'eau.

8. Procédé selon la revendication 6, dans lequel l'environnement aqueux est de la glace.

9. Procédé selon la revendication 6, dans lequel l'environnement aqueux est une solution.

10. Procédé selon l'une quelconque des revendications précédentes, dans lequel le manchon (5) comporte une région (15) de dimension extérieure accrue entre son extrémité (6) et sa portion effilée (7) et la portion effilée (7) est centrée dans le tube (1) par engagement de la région (15) de dimension extérieure accrue avec l'intérieur du tube.

11. Procédé selon l'une quelconque des revendications précédentes, dans lequel la portion effilée (7) est située adjacente à l'extrémité (6) du manchon (5) et la charge explosive (13) est maintenue dans un ensemble (8, 11) qui est doté d'un rebord (9) qui engage l'intérieur du tube (1) de manière à centrer le manchon dans le tube.

12. Appareil pour réparer une section endommagée (4) d'un tube (1) loin d'un support mécanique (2, 3) de tube (1), l'appareil comprenant :

un manchon (5) pouvant être positionné dans le tube (1) pour couvrir la section endommagée (4), le manchon comportant une portion (7) présentant une surface externe dont le diamètre est effilé vers une extrémité (6) du manchon;

un ensemble de maintien (8, 11) de charge explosive comprenant une coupelle (8) pour contenir une charge explosive (13) et positionnée dans la portion effilée (7) du manchon (5), et une portion centrale tronconique (10) s'étendant dans la charge explosive (13) et façonnant la charge de manière qu'elle aille en s'effilant et diminue en quantité le long de la portion effilée (7) du manchon;

un moyen de centrage pour engager un diamètre intérieur du tube (1) de manière à centrer la portion effilée (7) du manchon (5) dans le tube (1); et

une charge explosive (13) maintenue par ledit ensemble (8, 11) dans la portion effilée (7) du manchon (5) pour l'expansion et le soudage par explosion de la portion effilée du manchon à l'intérieur d'un tube.

13. Appareil selon la revendication 12, dans lequel ledit ensemble (8, 11) comprend une un capuchon (11) couvrant la charge explosive (13), un détonateur (12) pour la charge explosive est maintenu dans le capuchon (11), et le capuchon (11) comporte une rainure en son sein pour éviter la transmission de forces depuis le détonateur, lorsque le détonateur est amorcé, jusqu'au manchon (5).

14. Appareil selon la revendication 13, comprenant une charge de renfort (14) entre le détonateur (12) et la charge explosive (13).

15. Appareil selon l'une quelconque des revendications 12 à 14, dans lequel la surface externe de la portion effilée (7) du manchon (5) va en s'effilant à un angle de 1° à 5,7°.

16. Appareil selon la revendication 15, dans lequel l'angle est compris entre 3° et 4,7°.

17. Appareil selon l'une quelconque des revendications 12 à 16, dans lequel le moyen de centrage est dimensionné de manière à créer une distance d'écartement entre le manchon (5) et l'intérieur d'un tube (1) contenant le manchon de 0,16 à 2 fois l'épaisseur du manchon (5).

18. Appareil selon l'une quelconque des revendications 12 à 17, dans lequel ledit moyen de centrage comprend une région (15) de de dimension extérieure accrue du manchon (5), laquelle région est située entre l'extrémité (6) et la portion effilée (7) du manchon (5).

19. Appareil selon l'une quelconque des revendications 12 à 17, dans lequel ledit moyen de centrage comprend un rebord (9) de l'ensemble de maintien (8, 11) de la charge explosive.

20. Appareil selon l'une quelconque des revendications 12 à 14, dans lequel le manchon (5) présente une épaisseur de paroi comprise entre 0,76 mm (0,03") et 1,42 mm (0,056").

21. Appareil selon l'une quelconque des revendications 12 à 20, dans lequel le manchon (5) est en alliage Inconel 600 ou 690 et est positionné au sein d'un tube (1) d'alliage Inconel 600.

FIG.1

FIG.2

FIG.2A

*FIG. 3*

FIG. 4

MASS OF SLEEVE
(GRAMS)

NO WELD

TRANSITION ZONE

C/M=0.20

C/M=0.23

C/M=0.25

OPTIMUM RANGE

C/M=0.43

WELD

TOTAL EXPLOSIVE LOAD (GRAMS)

EP 0 381 880 B1